# EUROPEAN PATENT APPLICATION

(11) **EP 2 189 935 A1**
(43) Date of publication of application: **26.05.2010**
(21) Application number: 09014371.0
(22) Date of filing: 17.11.2009
(51) Int. Cl.: G06Q 30/00, H04L 29/08

(54) **Activity overlaid mapping services**

(30) Priority: 25.11.2008 US 323424
(71) Applicant: Broadcom Corporation, Irvine, CA 92617 (US)
(72) Inventor: Karaoguz, Jeyhan, 90602 Irvine CA (US); Bennett, James D., 36301 Hroznetin (CZ)
(74) Representative: Jehle, Volker Armin

(57) **Abstract**

Aspects of a method and system for activity overlaid mapping services are provided. A subscriber transmits a map request to a mapping service server connected to a data communication network. Upon the receipt of the map request from the subscriber, the mapping service server create enhanced map based on subscriber activity information collected from a plurality of subscribers associated with the mapping service server. The enhanced map is generated by correlating the collected subscriber activity information of the plurality of subscribers to geographic locations of interest indicated by the map request. The created enhanced map is delivered to the subscriber device. Upon the receiving the enhanced map, the subscriber device presents location information associated with the received enhanced map to users via a user interface in a preferred format. A level of subscriber activity information sharing is determined by each subscriber.

## Description

### CROSS-REFERENCE TO RELATED APPLICATIONS/INCORPORATION BY REFERENCE

Not applicable.

### FIELD OF THE INVENTION

Certain embodiments of the invention relate to communication systems. More specifically, certain embodiments of the invention relate to a method and system for activity overlaid mapping services.

### BACKGROUND OF THE INVENTION

Communication systems comprise both wired communication systems and wireless communication systems. Wired communication systems are networks that use wired media for the transmission of data such as, for example, the Public Switched Telephone Network (PSTN), Wide Area Networks (WANs), and Local Area Networks (LANs). Wireless communication systems are networks that employ a wireless link between a serviced terminal and a network infrastructure, for example, cellular telephone systems, satellite communication systems, Wireless Local Area Networks (WLANs), and Wireless Personal Area Networks (WPANs). Many communications are serviced using a combination of wireless communication systems and wired communication systems to provide various services such as Location-Based Services (LBS) to users. Location-Based Services are enabled via combining satellite communications and communication networks such as mobile networks. Satellite communications are becoming readily available in numerous navigation systems. For example, a navigation system is utilized to assist users of mobile devices in finding their way from one location to another typically via algorithms acting operating on map databases. Map databases are integral to many ITS (Intelligent Transportation Systems) applications in navigation, traffic forecasting, and route planning.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method and/or system for activity overlaid mapping services, substantially as shown in and/or described in connection with at least one of the figures, as set forth more completely in the claims.
According to an aspect, a method for communication comprises:
transmitting a map request from a subscriber device to a mapping service server serving a plurality of subscribers; and
receiving an enhanced map from said mapping service server, wherein said mapping service server creates said enhanced map in response to said map request based on subscriber activity information from said plurality of subscribers.
Advantageously, said map request comprise subscriber identification information.
Advantageously, the method further comprises accessing said mapping service server based on said subscriber identification information.
Advantageously, the method further comprises determining a level of sharing activity information of said subscriber with said mapping service server.
Advantageously, the method further comprises interacting with said mapping service server to provide activity information of said subscriber at said determined level.
Advantageously, said map request comprises geographic locations of interest to said subscriber.
Advantageously, said mapping service server creates said enhanced map relating to said geographic locations of interest to said subscriber based on said subscriber activity information of said plurality of subscribers.
Advantageously, said mapping service server creates said enhanced map by correlating said subscriber activity information of said plurality of subscribers to said geographic locations of interest to said subscriber.
Advantageously, said mapping service server delivers to said subscriber device said created enhanced map associated with said geographic locations of interest to said subscriber.
Advantageously, the method further comprises presenting said enhanced map to users of said subscriber device via a user interface.
According to an aspect, a system for communication comprises:
one or more circuits for use in a subscriber device, wherein said one or more circuits are operable to transmit a map request to a mapping service server serving a plurality of subscribers; and
said one or more circuits are operable to receive enhanced map from said mapping service server, wherein said mapping service server creates said metadata in response to said map request based on subscriber activity information from said plurality of subscribers.
Advantageously, said map request comprise subscriber identification information.
Advantageously, said one or more circuits are operable to accessing to said mapping service server based on said subscriber identification information.
Advantageously, said one or more circuits are operable to determine a level of sharing activity information of said subscriber with said mapping service server.
Advantageously, said one or more circuits are operable to interact with said mapping service server to provide activity information of said subscriber at said determined level.
Advantageously, said map request comprises geographic locations of interest of said subscriber.
Advantageously, said mapping service server creates said enhanced map relating to said geographic locations of interest to said subscriber based on said subscriber activity information of said plurality of subscribers.
Advantageously, said mapping service server creates said enhanced map by correlating said subscriber activity information of said plurality of subscribers to said geographic locations of interest to said subscriber.
Advantageously, said mapping service server delivers to said subscriber device said created enhanced map associated with said geographic locations of interest to said subscriber.
Advantageously, said one or more circuits are operable to present said enhanced map to users of said subscriber device via a user interface.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram of an exemplary communication system operable to provide activity overlaid mapping services, in accordance with an embodiment of the invention.

FIG. 2 is a block diagram illustrating an exemplary mapping service server, in accordance with an embodiment of the invention.

FIG. 3 is a flow chart illustrating an exemplary activity overlay sharing authentication procedure, in accordance with an embodiment of the invention.

FIG. 4 is a flow chart illustrating an exemplary activity data collection procedure, in accordance with an embodiment of the invention.

FIG. 5 is a flow chart illustrating an exemplary activity overlay based metadata generation procedure, in accordance with an embodiment of the invention.

FIG. 6 is a block diagram illustrating an exemplary subscriber device, in accordance with an embodiment of the invention.

FIG. 7 is a flow chart illustrating an activity overlay based metadata acquiring procedure, in accordance with an embodiment of the invention.

### DETAILED DESCRIPTION OF THE INVENTION

Certain embodiments of the invention may be found in a method and system for activity overlaid mapping services. In accordance with various embodiments of the invention, a subscriber device transmits a map request to a mapping service server communicatively coupled to a data communication supporting network. Upon receipt of the map request from the subscriber device, the mapping service server generates and/or creates metadata and/or enhanced maps based on subscriber activity information such as cash value of e-cash transactions and the volume of people that are using e-cash transactions collected from a plurality of subscriber devices associated with the mapping service server. The created metadata and/or enhanced maps are transmitted via the data communication supporting network and received by the subscriber device. The map request comprises subscriber identification information such as an identification code to gain access to the mapping service server. The mapping service server is operable to request sharing of corresponding subscriber activity information such as transaction value on certain items made via the subscriber device. The subscriber device is enabled to determine a level indicating that the user of the subscriber device wants to share with the mapping service server. The subscriber device is enabled to communicate the determined subscriber activity information sharing level with the mapping service server. The mapping service server communicates interactively with associated plurality of subscribers to collecting subscriber activity information.

In instances where the subscriber device requests a map from the mapping service server, information specifying geographic locations of interest to the subscriber device is included inside the map request. Upon receipt of the map request, the mapping service server creates or generates metadata and/or enhanced maps related to the geographic locations of interest based on collected subscriber activity information received from the plurality of subscribers associated with the mapping service server. The metadata and/or enhanced maps are created or generated by correlating the collected subscriber activity information of the plurality of subscribers to the geographic locations of interest. The created metadata and/or enhanced maps are delivered to the subscriber device via the data communication supporting network. Upon receiving the metadata and/or enhanced maps, the subscriber device displays or otherwise presents the received metadata and/or enhanced maps to users in a specified format.

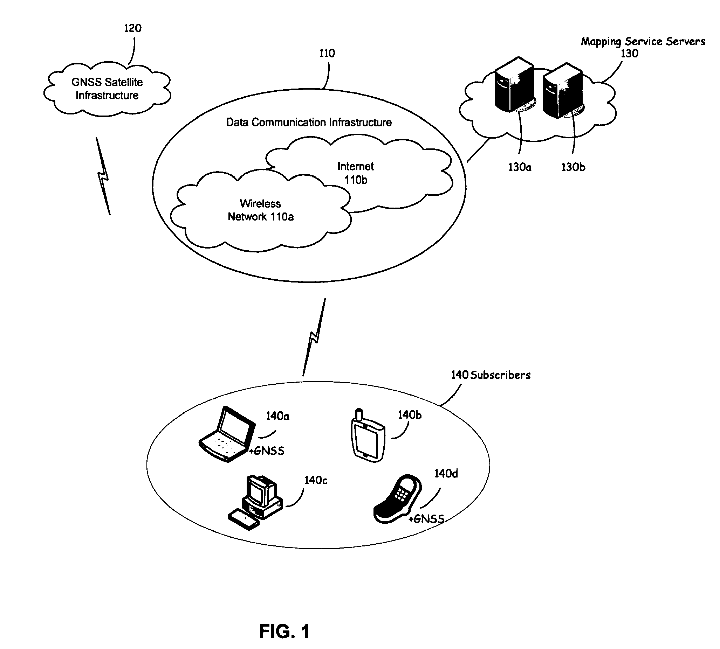

FIG. 1 is a diagram of an exemplary communication system operable to provide activity overlaid mapping services, in accordance with an embodiment of the invention. Referring to FIG. 1, there is shown the system of FIG. 1 comprises a data communication infrastructure 110, a GNSS satellite infrastructure 120, a plurality of mapping service servers 130, of which a mapping service server 110a and a mapping service server 110b are displayed, a plurality of subscribers 140, of which a GNSS enabled notebook 140a, a smart phone 140b, a desktop computer 140c, and a Global Navigation Satellite Service (GNSS) enabled cell phone 140d are displayed.

The data communication infrastructure 110 comprises suitable logic, circuitry and/or code that enable data communications among various communication devices. The data communication infrastructure 110 comprises a wireless network 110a and/or Internet 110b. The wireless network 110a comprises suitable logic, circuitry and/or code that are enabled to provide various wireless data services by using a particular technology such as GSM, UMTS, WiFi, WiMAX, or WLAN/LAN. The Internet 110b comprises suitable logic, devices and/or code that enable data communication using Internet Protocols (IP).

The GNSS infrastructure 120 comprises suitable logic, circuitry and/or code that provide navigation information to various GNSS receivers. The GNSS receivers are integrated into subscriber devices or are coupled to the subscriber devices such as the GNSS enabled notebook 140a and the GNSS enabled cell phone 140d.

The mapping service servers 130 comprise suitable logic, circuitry and/or code that are enabled to create metadata based on subscriber activity overlay. The created metadata is superimposed at geographic locations of interest on a map image. The superimposed information relating to the geographic locations of interest on the image represents various mapping services and is delivered to mapping service participants such as the subscribers 140. The mapping service servers 130 are enabled to gain accesses to subscribers to gather subscriber activity information such as, for example, the value of e-cash transactions and the volume of people using the e-cash. The gathered subscriber activity information provides indications of, for example, the popularity of a certain place and a certain item purchased from that certain place. The mapping service servers 130 are operable to generate activity overlay based metadata by anonymously merging the gathered subscriber activity information into metadata. The mapping service servers 130 are operable to utilize the generated activity overlay based metadata to provide various mapping services such as an anonymous advertisement on an enhanced map that is accessible to various subscribers. The mapping service servers 130 are enabled to deliver overlaid subscriber activity information in the activity overlay based metadata via various ways. For example, the overlaid subscriber activity information in the activity overlay based metadata may be delivered to the subscriber device as image data at corresponding geographic locations. Moreover, the overlaid subscriber activity information in the activity overlay based metadata may be selectively delivered such as, for example, using actual overlaid subscriber activity information or associated icons. In this regard, the mapping service servers 130 is operable to allow the subscriber to brow the associated icons to access details of a particular type of overlaid subscriber activity information in the activity overlay based metadata. The mapping service server 130 is operable to communicate various mapping services such as enhanced maps comprising the overlaid subscriber activity information with the participated subscribers via the data communication infrastructure 110 such as, the wireless network 110b and/or the Internet 110a.

The subscribers 140 comprise suitable logic, circuitry and/or code that enable various data communications via the wireless network 110b and/or internet 110a. The subscribers 140 gain various mapping services by participating in the mapping service servers 130. The subscribers 140 allow the mapping service servers 130 to share corresponding subscriber activity information to various degrees. For example, a subscriber device is configured to record some or all transactions and share transactions that are associated with some or all items associated with some or all of those transactions.

In operation, activity information of the subscribers 140 is gathered by the mapping service server 130 via the wireless network 120b and/or the Internet 120a. The mapping service server 130 is enabled to generate metadata for various mapping services such as enhanced maps based on subscriber activity overlay. The activity overlay based metadata or the enhanced maps are communicated in various ways such as, for example, as an enhanced map image, with a given subscriber such as the GNSS enabled cell phone 140d. In this regard, the activity overlay based metadata is delivered to the GNSS enabled cell phone 140d via the data communication infrastructure 110.

A given subscriber is authorized by the mapping service servers 130 to gain access to various mapping services provided via the mapping service servers 130. Meanwhile, the mapping service servers 130 is operable to request participating subscribers such as the subscribers 140 to share corresponding activity information, which is anonymously merged into metadata as, for example, an anonymous advertisement accessible to a plurality of subscribers. The degree or level of the subscriber activity information sharing of a given subscriber is determined by the given subscriber. For example, a subscriber is provided with the capability to share all transaction cash value but not the detailed descriptions of the corresponding merchants.

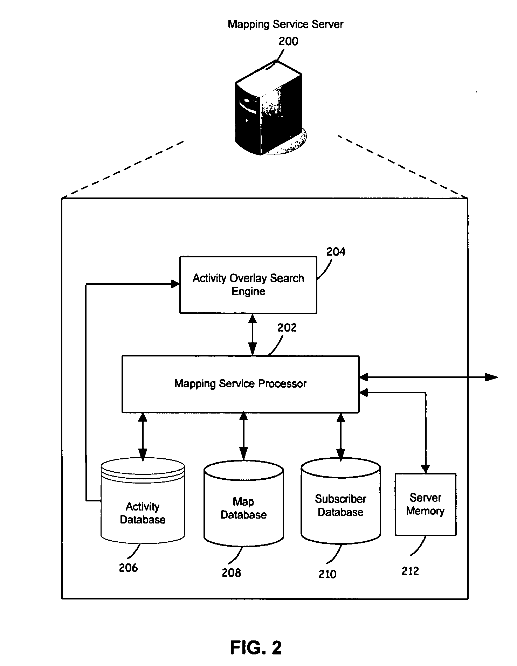

FIG. 2 is a block diagram illustrating an exemplary mapping service server, in accordance with an embodiment of the invention. Referring to FIG. 2, there is shown an exemplary mapping service server 200 comprising a mapping service processor 202, an activity overlay search engine 204, an activity database 206, a map database 208, a subscriber database 210, and a server memory 212.

The mapping service processor 202 comprises suitable logic, circuitry and/or code that enable control and/or data processing operations for the mapping service server 200. The mapping service processor 202 is enabled to gather subscriber activity information and anonymously merge into metadata. The metadata is superimposed to geographic locations of interest of a map image. The mapping service processor 202 is operable to communicate the superimposed information with a given subscribed for a requested mapping service. The mapping service processor 202 manages and control subscriber-server authentication and/or subscriber-server interaction for activity overlay based information sharing.

The activity overlay search engine 204 comprises suitable logic, circuitry and/or code that overlays subscriber activity information to geographic locations of interest on a map image relating to various mapping service requests. For example, the activity overlay search engine 204 enables identifying facilities relating to activity types such as jewelry repair near the geographic locations of interest. Depending on a requested mapping service from a subscriber such as the GNSS enabled cell phone 140d, the activity overlay search engine 204 is operable to select searching restrictions and generate a list of entries associated with the geographic locations of interest.

The searching results provide a listing of things associated the geographic locations of interest. The portion of the activity database 206 is determined based on the selected searching criteria. For example, a person may want to look for a movie theater near their current location and to also find a movie that is drawing lots of viewers. The activity overlay search engine 204 is programmed to select searching restrictions such as, for example, movie theaters, transactions on movies that are on out, and/or the volume of people who are making the transactions. The activity overlay search engine 204 then generates an output comprising a map image showing up with the movie theaters nearby correlated against the selected subscriber activities restrictions such as transactions on movies that are on out. The activity overlay search engine 204 is updated when subscriber activity information is changed and/or a new service request is received.

The activity database 206 comprises suitable logic, circuitry and/or code that comprise details of subscribers' activity information, for example, e-cash and/or credit card transactions of subscribers, who are the transactions paying, when the transactions are made, and what the merchants are.

The map database 208 comprises suitable logic, circuitry and/or code that enable storage of map data comprising, for example, coordinate data representative of maps of geographical areas. Some details of facility characteristics, for example, hotels, restaurants, shops or the like, associated with the geographical coordinates of each location are also stored in the map database 208. The map database 208 is stored in RAM, ROM, low latency nonvolatile memory such as flash memory and/or other suitable electronic data storage capable of storing data and instructions.

The subscriber database 210 comprises suitable logic, circuitry and/or code that enable storage of subscriber information pertaining to the mapping service server 130. The subscriber information comprises the subscriber identifier, user context, subscriber service profiles, subscriber device configuration information, telephone numbers, and associated location area identifier and postcode. The location area identifier may comprise IP address and GNSS address, associated with the subscribers. The subscriber database 210 is stored in RAM, ROM, low latency nonvolatile memory such as flash memory and/or other suitable electronic data storage capable of storing data and instructions.

The server memory 212 comprises suitable logic, circuitry, and/or code that enable storage of data and/or other information utilized by the mapping service processor 202. For example, the server memory 212 is utilized to store processed data generated by the mapping service processor 202. The server memory 212 stores executable instructions to process gathered subscriber activity information, for example, various algorithms for correlating subscriber activity information against geographic locations of interest. Some software such as Internet reading software is stored in the memory 212 for communicating subscriber activity information via the Internet 120a. The server memory 212 comprises RAM, ROM, low latency nonvolatile memory such as flash memory and/or other suitable electronic data storage capable of storing data and instructions.

In operation, subscriber activity information such as, for example, transactions made by the subscribers 140 and merchant associated with the transactions is gathered by the mapping service server 200 via the data communication infrastructure 110. The mapping service processor 202 is enabled to authorize the subscribers 140 to gain access to the mapping service server 200 for sharing associated activity information at various levels or degrees and various mapping services. The subscriber information such as subscriber ID and subscriber device configuration profiles are stored in the subscriber database 210. The mapping service processor 202 is operable to communicate with the activity overlay searching engine 204 to provide various mapping services requested by the authorized subscribers 140. A mapping service request to the mapping service server 200 from a given subscriber specifies geographic locations of interest of a map supplied by the map database208. The mapping service processor 202 communicates the received mapping service request with the activity overlay searching engine 204. The activity overlay searching engine 204 is operable to select one or more searching restrictions based on the characteristics of the given mapping service request. Based on the selected searching restrictions, the activity overlay search engine 204 is operable to merge corresponding subscriber activity information from the activity database 206 into metadata to provide subscriber activity information to geographic locations of interest for the given service request. The mapping service processor 202 is enabled to communicate with the given subscriber the metadata on top of the map from in the map database 208.

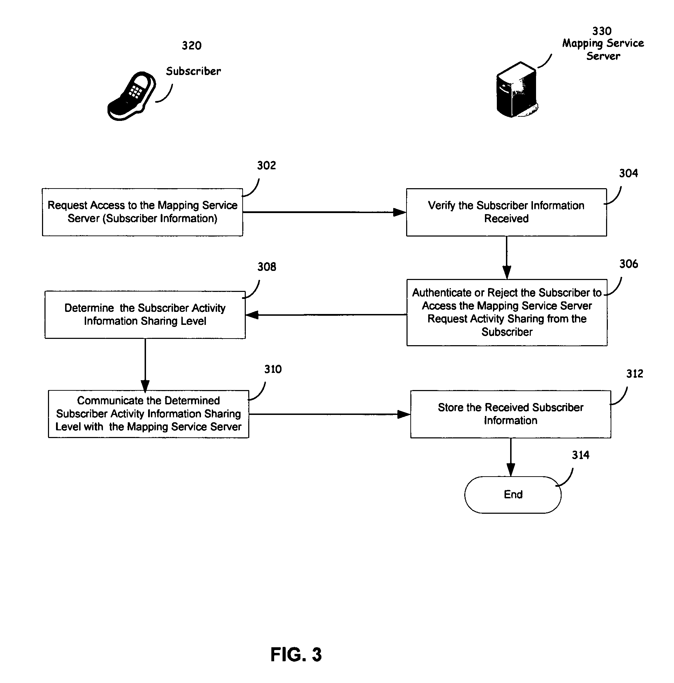

FIG. 3 is a flow chart illustrating an exemplary activity overlay sharing authentication procedure, in accordance with an embodiment of the invention. Referring to FIG.3, the exemplary steps start with the step 302, where a subscriber 320 request access to the mapping service server 330. The request comprises subscriber information such as the subscriber ID and/or the subscriber address. In step 304, the mapping service server 330 verifies the received subscriber information via various security checks, for example. In step 306, the mapping service server 330 determines whether to authenticate or reject the received access request and communicate with the subscriber 320 to request sharing activity information from the subscriber 320. In step 308, the subscriber 320 determines an activity sharing level. In step 310, the subscriber 320 communicates the determined subscriber activity sharing level with the mapping service server 330. In step 312, the mapping service server 330 receives the subscriber activity sharing level from the subscriber 320 and stores into the subscriber database 210. The exemplary steps end with step 314.

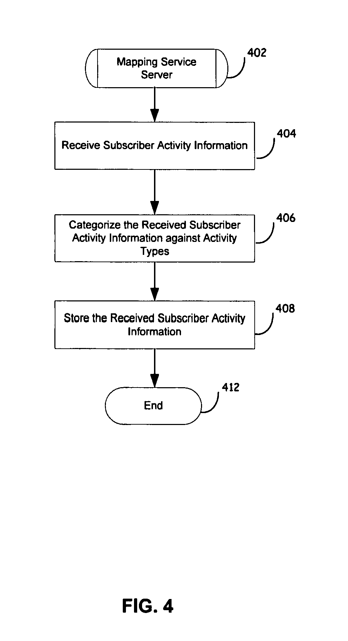

FIG. 4 is a flow chart illustrating an exemplary activity data collection procedure, in accordance with an embodiment of the invention. Referring to FIG.4, the exemplary steps start with the step 402, where the mapping service server 200 is authorized by, for example, the subscribers 140, to share associated subscriber activity information at a certain degree. In step 404, the mapping service server 200 receives subscriber activity information via, for example, the Internet 110a and/or some subscriber-server interactive communications. In step 406, the received subscriber activity information is categorized against activity types. In step 408, the categorized subscriber activity information is stored in the activity database 206. The exemplary steps end with step 412.

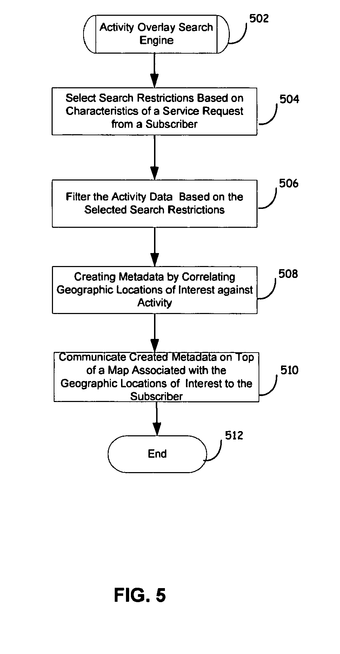

FIG. 5 is a flow chart illustrating an exemplary activity overlay based metadata generation procedure, in accordance with an embodiment of the invention. Referring to FIG.5, the exemplary steps start with the step 502, where the activity overlay search engine 204 receives subscriber service request information via the mapping service processor 202. In step 504, the activity overlay search engine 204 is enabled to select search restrictions based on the received service request. In step 506, the activity overlay search engine 204 is operable to filter the activity data stored in the activity database 204 to be used for creating metadata relating to the received service request. In step 508, activity overlay search engine 204 creates metadata by correlating the filtered subscriber activity data to geographic locations of interest relating to the received service request. In step 510, the created metadata is communicated on top of a map associated with the geographic locations of interest. The exemplary steps end with step 512.

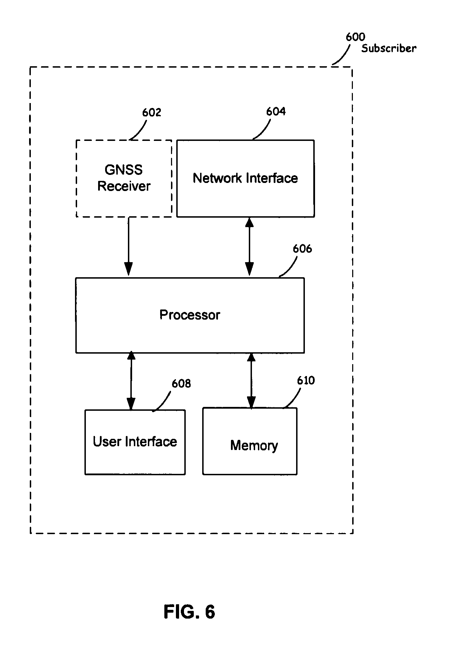

FIG. 6 is a block diagram illustrating an exemplary subscriber device, in accordance with an embodiment of the invention. Referring to FIG.6, there is shown a subscriber device 600 comprising an optional Global Navigation Satellite System (GNSS) receiver 602, a network interface 604, a processor 606, a memory 608, and a user interface 610.

The GNSS receiver 602 comprises suitable logic, circuitry and/or code that are enabled to receive Global Navigation Satellite System (GNSS) broadcast signals and convert them to corresponding GNSS baseband signals. The corresponding GNSS baseband signals are then processed by the processor 606 to determine positional information of the subscriber device 600. The integration of the GNSS receiver 602 to the subscriber device 600 is optional. In the case that the subscriber device 600 comprises the GNSS receiver 602. The GNSS receiver 602 is operable to provide navigation information for the subscriber device 600 to identify associated geographical location. The GNSS receiver 602 comprises a GPS, GALILEO and/or a GLONASS receiver.

The network interface 604 comprises suitable logic, circuitry and/or code that are enabled to transmit and/or receive radio signals over a network such as the data communication infrastructure 110. The network is a wired and/or wireless network. In this regard, the communicated radio signals comprise subscriber activity information from the subscriber device 600 to the mapping service servers 130 and/or activity overlay based metadata from the mapping service servers 130 to the subscriber device 600.

The processor 606 comprises suitable logic, circuitry and/or code that are enabled to process and handle signals received from a supporting communication network and/or satellite signals from the GNSS satellite infrastructure 120. The processor 606 is enabled to communicate with the mapping service servers 130 for sharing associated subscriber activity information and/or gaining a desired mapping service, which comprises a list of things provided by the mapping service servers 130 by overlaying subscriber activity information to geographic locations of interest indicated by the subscriber device 600.

The user interface 608 comprises suitable logic, circuitry and/or code that are operable to service the subscriber device 600 via entering user inputs and/or presenting acquired mapping services to users. The user interface 608 comprise a microphone, a speaker, a keypad, a screen, a touch screen, a light, a voice recognition system, a camera, and/or any other type of interfaces that is employed in the subscriber device 600.

The memory 610 comprises suitable logic, circuitry, and/or code that enable storage of data and/or other information utilized by the processor 606. The memory 610 is utilized to store information, such as algorithms that are utilized to control various operations of the subscriber device 600. The memory 610 stores some executable instructions for running various services on the subscriber device 600. Various subscriber activity data, which are shared with the mapping service servers 130, are stored in the memory 610.

In operation, the subscriber device 600 gains access to the mapping service servers 130 via subscriber information such as, for example, the subscriber ID and the subscriber context. The processor 606 is enabled to process the activity information of the subscriber device 600 and share with the mapping service servers 130 at a certain degree. The subscriber 600 acquires various activity overlay based mapping services from the mapping service servers 130 via the network interface 604. The received mapping services are processed at the processor 606 to present to users in user preferred format via the user interface 608.

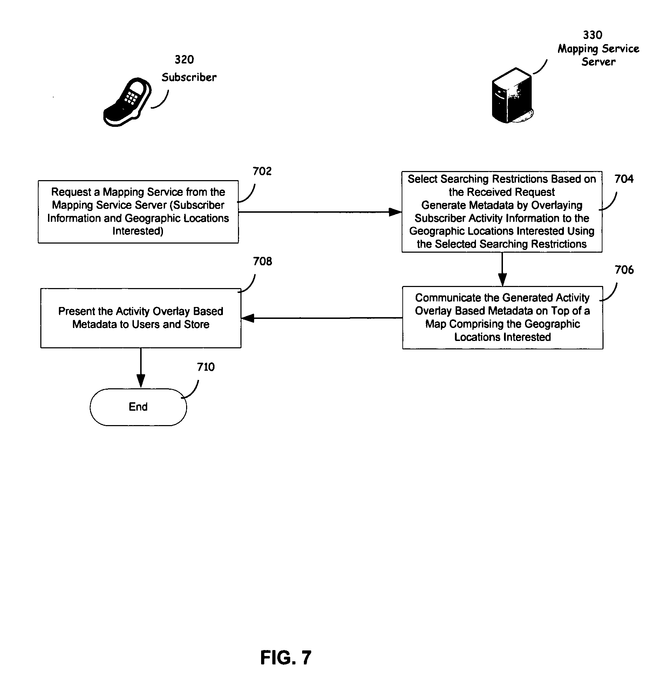

FIG. 7 is a flow chart illustrating an activity overlay based metadata acquiring procedure, in accordance with an embodiment of the invention. The exemplary steps start with the step 702, where the subscriber 320 gains access to the mapping service server 330. The subscriber 320 requests a mapping service for geographic locations interested. The geographic locations interested are indicated by full or partial addresses, names, postal code, or longitude and latitude information. In step 704, upon the receipt of the mapping service request from the subscriber 320, the mapping service server 330 selects searching restrictions based on the characteristics of the request and generates metadata by overlaying the activity data inside the activity database 206 onto the geographic locations of interest based on the selected searching restrictions. In step 706, the generated metadata is communicated on top of a map associated with the geographic locations of interest to the subscriber 320. In step 708, upon the receipt of the metadata, the subscriber 320 presents the received metadata to users in a preferred format via the user interface 608 and stored in the memory 610. The exemplary steps end with step 710.

Aspects of a method and system for activity overlaid mapping services are provided. In accordance with various embodiments of the invention, a subscriber such as the GNSS enabled cell phone 140b in the system illustrated in FIG. 1 transmits a map request to a mapping service server such as the mapping service server 130a. Upon receipt of the map request from the GNSS enabled cell phone 140d, the mapping service server 130a creates or generates metadata and/or enhanced maps based on subscriber activity information such as cash value of e-cash transactions and the volume of people that are using e-cash transactions collected from a plurality of subscribers associated with the mapping service server 130a. The created metadata and/or enhanced maps are transmitted via the data communication infrastructure and received by the GNSS enabled cell phone 140d via the network interface 604. As described in FIG.3, the map request comprises subscriber identification information such as an identification code to gain access to the mapping service server 130a.

The mapping service server 130a is operable to request sharing corresponding subscriber activity information such as transaction value on certain items made via the GNSS enabled cell phone 140d. The GNSS enabled cell phone 140d is enabled to determine a level that the user of the GNSS enabled cell phone 140d wants to share with the mapping service server 130a. The GNSS enabled cell phone 140d communicates the determined subscriber activity information sharing level with the mapping service server 130a. The mapping service server 130a communicates interactively with associated plurality of subscribers to collecting subscriber activity information. As described with respect to FIG.7, the GNSS enabled cell phone 140d requests a map from the mapping service server 130a. Geographic locations of interest of the GNSS enabled cell phone 140d are included within the map request. Upon the receipt of the map request, the mapping service server 130a generates or creates metadata and/or enhanced maps relating to the geographic locations of interest based on collected subscriber activity information of the plurality of subscribers associated with the mapping service server 130a. The metadata and/or enhanced maps are created by correlating the collected subscriber activity information of the plurality of subscribers to the geographic locations of interest. The created metadata and/or enhanced maps are delivered to the GNSS enabled cell phone 140d via the data communication infrastructure 110. Upon receiving the metadata and associated map, the GNSS enabled cell phone 140d present corresponding location information to users, via the user interface 608, in a preferred format.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for activity overlaid mapping services.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
transmitting a map request from a subscriber device to a mapping service server serving a plurality of subscribers; and
receiving an enhanced map from said mapping service server, wherein said mapping service server creates said enhanced map in response to said map request based on subscriber activity information from said plurality of subscribers.

2. The method according to claim 1, wherein said map request comprise subscriber identification information.

3. The method according to claim 2, comprising accessing said mapping service server based on said subscriber identification information.

4. The method according to claim 1, comprising determining a level of sharing activity information of said subscriber with said mapping service server.

5. The method according to claim 4, comprising interacting with said mapping service server to provide activity information of said subscriber at said determined level.

6. The method according to claim 1, wherein said map request comprises geographic locations of interest to said subscriber.

7. A system for communication, the system comprising:
one or more circuits for use in a subscriber device, wherein said one or more circuits are operable to transmit a map request to a mapping service server serving a plurality of subscribers; and
said one or more circuits are operable to receive enhanced map from said mapping service server, wherein said mapping service server creates said metadata in response to said map request based on subscriber activity information from said plurality of subscribers.

8. The system according to claim 7, wherein said map request comprise subscriber identification information.

9. The system according to claim 8, wherein said one or more circuits are operable to accessing to said mapping service server based on said subscriber identification information.

10. The system according to claim 7, wherein said one or more circuits are operable to determine a level of sharing activity information of said subscriber with said mapping service server.
